# EUROPÄISCHE PATENTSCHRIFT

(11) **EP 3 134 229 B1**
(45) Veröffentlichungstag und Bekanntmachung des Hinweises auf die Patenterteilung: **24.10.2018**
(21) Anmeldenummer: 15714205.0
(22) Anmeldetag: 01.04.2015
(51) Int. Cl.: B25D 16/00, F16D 7/02

(54) **HANDWERKZEUGMASCHINE**
MANUAL MACHINE TOOL
MACHINE-OUTIL PORTATIVE

(30) Priorität: 22.04.2014 EP 14165357
(43) Veröffentlichungstag der Anmeldung: 01.03.2017
(73) Patentinhaber: Hilti Aktiengesellschaft, 9494 Schaan (LI)
(72) Erfinder: SCHALLERT, Manfred, A-6710 Nenzing (AT); LUDWIG, Manfred, 86899 Landsberg (DE); MANSCHITZ, Erwin, 82110 Germering (DE); STROISSNIGG, Horst, 86932 Pürgen (DE); KAIBACH, Werner, 86916 Kaufering (DE); MÖSSNANG, Franz, 86391 Stadbergen (DE)
(74) Vertreter: Hilti Aktiengesellschaft Corporate Intellectual Property
(86) Internationale Anmeldenummer: PCT/EP2015/057158
(87) Internationale Veröffentlichungsnummer: WO 2015/161994

(56) Entgegenhaltungen:
- DE-A1- 2 951 420
- DE-A1- 3 942 806
- JP-A- S5 969 529

## Beschreibung

### GEBIET DER ERFINDUNG

Die vorliegende Erfindung betrifft eine Handwerkzeugmaschine für rotierende Werkzeuge, insbesondere eine Bohrmaschine oder einen Bohrhammer. Eine gattungsgemäße Handwerkzeugmaschine mit den Merkmalen des Oberbegriffs von Anspruch 1 ist aus der DE 29 51 420 A1 bekannt.

Ein beispielhafter Bohrhammer ist aus der US5954457 A bekannt. Der Bohrhammer hat ein pneumatisches Schlagwerk, welches auf einem per Motor vor- und zurückbewegten Erregerkolben und einem über eine Luftfeder an den Erregerkolben angekoppelten Schlagkolben basiert. Ein Bohrer kann zusätzlich zu den Schlägen mittels eines Drehantriebs um seine Achse gedreht werden. Eine Überlastkupplung trennt den Drehantrieb von dem Motor. Die Überlastkupplung ist in einem hohlen Ritzel integriert. Eine motorseitige Welle ist mit federbelasteten Rastelementen versehen, die in radialer Richtung in das Ritzel formschlüssig eingreifen.

### OFFENBARUNG DER ERFINDUNG

Die erfindungsgemäße Handwerkzeugmaschine gemäß Anspruch 1 hat eine Werkzeugaufnahme zum Aufnehmen eines Werkzeugs auf einer Arbeitsachse, einen Motor und ein pneumatisches Schlagwerk. Eine Abtriebswelle ist mit der Werkzeugaufnahme zum Drehen des Werkzeugs um die Arbeitsachse gekoppelt. Eine Rutschkupplung ist in dem Antriebsstrang zwischen dem Motor und der Abtriebswelle angeordnet. Die Rutschkupplung hat eine antriebsseitige Scheibe und eine abtriebsseitige Scheibe. Die antriebsseitige Scheibe hat auf einer an der abtriebsseitigen Scheibe anliegenden, antreibenden Ringfläche erste Sektoren mit einem hohen Reibwert und zweite Sektoren mit einem geringen Reibwert. Die abtriebsseitige Scheibe hat auf der an der antreibenden Ringfläche anliegenden, angetriebenen Ringfläche dritte Sektoren mit einem hohen Reibwert und vierte Sektoren mit einem geringen Reibwert. Die ersten Sektoren und die dritten Sektoren weisen eine gummierte Oberfläche und die zweiten Sektoren und die vierten Sektoren eine polierte Stahlfläche auf.

Die Rutschkupplung ermöglicht einen sehr kompakten Aufbau mit einer geringen Anzahl von einzelnen Bauelementen, was die Montage vereinfacht.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: eine Rutschkupplung,
- Fig. 3: eine Scheibe der Rutschkupplung in Draufsicht
- Fig. 4: eine Scheibe einer Rutschkupplung in Draufsicht
- Fig. 5: eine Rutschkupplung
- Fig. 6: eine Scheibe der Rutschkupplung in Draufsicht

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

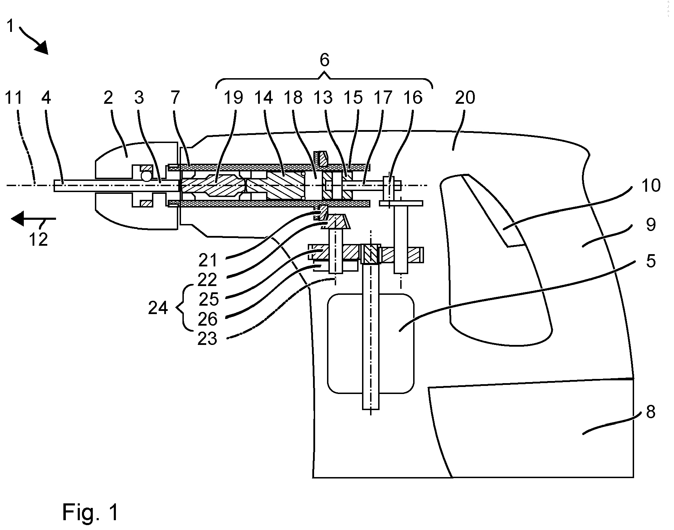

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Ein Anwender kann den Bohrhammer **1** mittels eines Handgriffs **9** führen und mittels eines Systemschalters **10** den Bohrhammer **1** in Betrieb nehmen. Im Betrieb dreht der Bohrhammer **1** den Bohrer **4** kontinuierlich um eine Arbeitsachse **11** und kann dabei den Bohrer **4** in Schlagrichtung **12** längs der Arbeitsachse **11** in einen Untergrund schlagen.

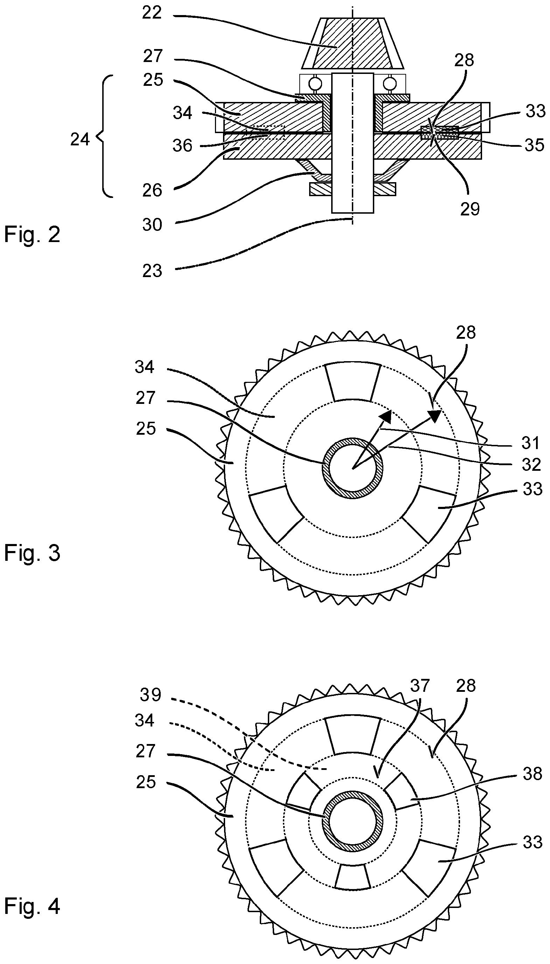

Das Schlagwerk **6** ist ein pneumatisches Schlagwerk **6.** Ein Erregerkolben **13** und ein Schläger **14** sind in einem Führungsrohr **15** in dem Schlagwerk **6** längs der Arbeitsachse **11** beweglich geführt. Der Erregerkolben **13** ist über einen Exzenter **16** an den Motor **5** angekoppelt und zu einer periodischen, linearen Bewegung gezwungen. Ein Pleuel **17** verbindet den Exzenter **16** mit dem Erregerkolben **13.** Eine Luftfeder gebildet durch eine pneumatische Kammer **18** zwischen dem Erregerkolben **13** und dem Schläger **14** koppelt eine Bewegung des Schlägers **14** an die Bewegung des Erregerkolbens **13** an. Der Schläger **14** kann direkt auf ein hinteres Ende des Bohrers **4** aufschlagen oder mittelbar über einen im Wesentlichen ruhenden Zwischenschläger **19** einen Teil seines Impuls auf den Bohrer **4** übertragen. Das Schlagwerk **6** und vorzugsweise die weiteren Antriebskomponenten sind innerhalb eines Maschinengehäuses **20** angeordnet.
Die Abtriebswelle **7** ist vorzugsweise ein hohles Rohr, welches in das Führungsrohr **15** übergeht. Ein Kegelrad **21** ist koaxial auf der Abtriebswelle **7** angeordnet. Das Kegelrad **21** kann mittels eines Presssitzes oder mittels einer Verzahnung drehfest mit der Abtriebswelle **7** verbunden sein. Ein Ritzel **22** kämmt mit dem Kegelrad **21.** Das Ritzel **22** dreht um eine Drehachse **23.** Zwischen dem Ritzel **22** und dem Motor **5** ist eine Rutschkupplung **24** angeordnet, welche eine Übertragung eines Drehmoments bei einer Überlast kurzzeitig unterbricht. Die Rutschkupplung **24** hat eine antriebsseitige Scheibe **25** und eine abtriebsseitige Scheibe **26,** welche beispielhaft um die gleiche Drehachse wie das Ritzel **22** drehen. Die antriebsseitige Scheibe **25** ist beispielsweise ein Zahnrad mit einer Stirnverzahnung, die mit einem Zahnrad auf der Motorwelle kämmt. Eine Hülse **27** entkoppelt die antriebsseitige Scheibe **25** von dem Ritzel **22.** Die abtriebsseitige Scheibe **26** ist drehfest mit dem Ritzel **22** verbunden.
Die antriebseitige Scheibe **25** hat eine aktive Seite mit einer Ringfläche **28.** Die abtriebsseitige Scheibe **26** hat ebenfalls eine aktive Seite mit einer Ringfläche **29.** Die beiden aktiven Seiten berühren einander, insbesondere die beiden Ringflächen **28, 29.** Eine Feder **30** stellt sich, dass die beiden Ringflächen **28, 29** permanent in Kontakt sind. Vorzugsweise ist weder die antriebsseitige Scheibe **25** noch die abtriebsseitige Scheibe **26** längs der Drehachse **23** beweglich.
Die Ringfläche **28** der antriebsseitigen Scheibe **25** ist in Fig. 3 in einer Draufsicht dargestellt. Die Ringfläche **28** hat einen inneren Radius **31** und einen äußeren Radius **32.** Die beispielhafte Ringfläche **28** hat drei erste Sektoren **33,** welche mit einer Gummierung versehen sind. Die ersten Sektoren **33** überdecken vorzugsweise jeweils einen Winkel von weniger als 45 Grad von der Drehachse **23** aus betrachtet. Die drei ersten Sektoren **33** sind symmetrisch um die Drehachse **23** verteilt. Die verbleibenden anderen drei zweiten Sektoren **34** sind polierte Stahlflächen. Die Ringfläche **29** der abtriebsseitigen Scheibe **26** ist vorzugsweise gleich der Ringfläche **33** der antriebsseitigen Scheibe **25** ausgeprägt. Ein innerer Radius und ein äußerer Radius der Ringfläche **29** sind gleich der gegenüberliegenden Ringfläche **33,** so dass diese einander berühren. Die abtriebsseitige Ringfläche **29** hat ebenfalls drei (dritte) Sektoren **35,** welche gummiert sind. Ihre Abmessungen sind vorzugsweise gleich den ersten Sektoren **33.** Die verbleibenden (vierten) Sektoren **36** sind polierte Stahlflächen. Die Rutschkupplung **24** bleibt solange in Eingriff, wie die gummierten ersten und dritten Sektoren **33, 35** aufeinander liegen. Der Anpressdruck der Feder **30** erhöht die Haftung der beiden Sektoren **33**, **35.** Sobald die Haftkraft durch das anliegende Drehmoment überschritten wird, verrutscht die antreibende Scheibe **25** und die ersten Sektoren **33** überlappen zunehmend und final ausschließlich mit den vierten Sektoren **36.** Die antreibende Scheibe **25** kann nun fast ohne Drehmoment gegenüber der abtreibenden Scheibe **26** gedreht werden. Entsprechend beschleunigt den Motor **5.** Der große Winkel von vorzugsweise mehr als 75 Grad zwischen den ersten Sektoren **33** ermöglicht eine lange Beschleunigungsphase. Der Motor **5** kann eine hohe Drehmomentspitze erzeugen, um beispielsweise einen Bohrer **4** zu lösen, der bei einem geringeren statischen Drehmoment sich nicht mehr drehen lässt und die Rutschkupplung **24** auslöst.
Bei einer bevorzugten Ausgestaltung haben die Ringflächen **28, 29** drei, zwei oder vorzugsweise nur einen ersten w. dritten Sektor **33, 35.** Die Sektoren **33, 35** nehmen zwischen 25 % und 40 % der Ringfläche **29** ein, um eine ausreichende Haftung für die Übertragung eines Drehmoments bereitzustellen.
Fig. 4 zeigt eine weitere Ausgestaltung, bei welcher die antreibende Scheibe **25** zwei konzentrische Ringflächen **28, 37** aufweist. Die beiden Ringflächen **28, 37** überlappen nicht. Beide Ringflächen **28, 37** haben jeweils erste Sektoren **33, 38** mit einer Gummierung und zweite Sektoren **34, 39** mit einer polierten Stahlfläche. Die ersten Sektoren **33** der äußeren Ringfläche **28** sind vorzugsweise gegenüber den Sektoren **38** der inneren Ringfläche **37** um den halben Winkel zwischen den ersten Sektoren **33** der äußeren Ringfläche **28** versetzt.

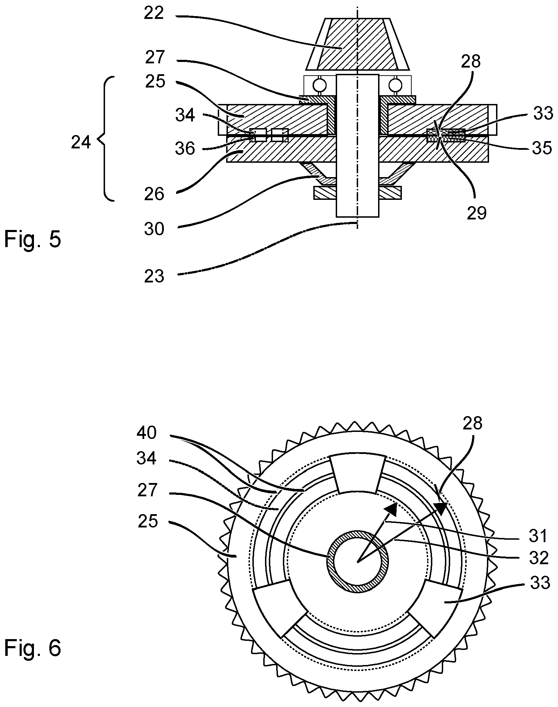

Fig. 5 und Fig. 6 zeigen eine weitere Ausgestaltung, bei welcher die zweiten Sektoren **34** einen oder mehrere zur Achse **23** konzentrische, kreisförmige Stege **40** enthalten. Die Dachflächen der Stege **40** liegen in einer Ebene mit der Ringfläche **28.** Zwischen den Stegen **40** ist eine entsprechende konzentrisch verlaufende Nut. Die ersten Sektoren **33** berühren vollständig und die zweiten Sektoren berühren nur mittels der Stege **40** die Ringfläche **29** der angetriebenen Scheibe **26.** Die angetriebene Scheibe **26** kann identisch zu der antreibenden Scheibe **25** ausgebildet sein.

## Patentansprüche

1. Handwerkzeugmaschine (1) mit
einer Werkzeugaufnahme (2) zum Aufnehmen eines Werkzeugs (4) auf einer Arbeitsachse (11),
einem Motor (5),
einem pneumatischen Schlagwerk (6), einer Abtriebswelle (7), die mit der Werkzeugaufnahme (2) zum Drehen des Werkzeugs um die Arbeitsachse (11) gekoppelt ist und einer Rutschkupplung (24), die in dem Antriebsstrang zwischen dem Motor (5) und der Abtriebswelle (7) angeordnet ist,
wobei die Rutschkupplung (24) eine antriebsseitige Scheibe (25) und eine abtriebsseitige Scheibe (26) aufweist, **dadurch gekennzeichnet, dass** die antriebsseitige Scheibe (25) auf einer an der abtriebsseitigen Scheibe (26) anliegenden antreibenden Ringfläche (28) erste Sektoren (33) mit einem hohen Reibwert und zweite Sektoren (34) mit einem geringen Reibwert und die abtriebsseitige Scheibe (26) auf der an der antreibenden Ringfläche (28) anliegenden angetriebenen Ringfläche (29) dritte Sektoren (35) mit einem hohen Reibwert und vierte Sektoren (36) mit einem geringen Reibwert aufweist, und, dass die ersten Sektoren (33) und die dritten Sektoren (35) eine gummierte Oberfläche und die zweiten Sektoren (34) und die vierten Sektoren (36) eine polierte Stahlfläche aufweisen.

2. Handwerkzeugmaschine (1) nach Anspruch 1, **dadurch gekennzeichnet, dass** eine Feder (30) die beiden Ringflächen (28, 29) in permanenten Kontakt hält.

3. Handwerkzeugmaschine (1) nach einem der vorhergehenden Ansprüche, **dadurch gekennzeichnet, dass** die Ringflächen (28, 29) jeweils maximal drei erste Sektoren (33) und maximal drei dritte Sektoren (35) aufweisen.

4. Handwerkzeugmaschine (1) nach Anspruch 3, **dadurch gekennzeichnet, dass** die ersten Sektoren (33) und die dritten Sektoren (35) ein Viertel bis ein Drittel der Ringflächen (28, 29) bedecken.

5. Handwerkzeugmaschine (1) nach einem der vorhergehenden Ansprüche, **dadurch gekennzeichnet, dass** die zweiten Sektoren (34) zur Arbeitsachse (11) konzentrische Stege (40) aufweisen, die in einer Ebene mit dem ersten Sektor (33) liegen.

## Claims

1. Hand machine tool (1) with
a tool holder (2) for holding a tool (4) on a working axis (11),
a motor (5),
a pneumatic striking mechanism (6),
an output shaft (7), which is connected to the tool holder (2) for turning the tool around the working axis (11), and
a slip clutch (24), which is arranged in the drive train between the motor (5) and the output shaft (7),
in which the slip clutch (24) has a disc (25) on the drive side and a disc (26) on the output side, **characterised in that** the disc (25) on the drive side has first sectors (33) with a high friction value and second sectors (34) with a low friction value on a driving ring face (28) adjoining the disc (26) on the output side and the disc (26) on the output side has third sectors (35) with a high friction value and fourth sectors (36) with a low friction value on the driven ring face (29) adjoining the driving ring face (28) and the first sectors (33) and the third sectors (35) have a rubberised surface and the second sectors (34) and the fourth sectors (36) have a polished steel surface.

2. Hand machine tool (1) according to claim 1, **characterised in that** a spring (30) holds both ring faces (28, 29) in permanent contact.

3. Hand machine tool (1) according to one of the previous claims, **characterised in that** the ring faces (28, 29) have a maximum of three first sectors (33) and a maximum of three third sectors (35).

4. Hand machine tool (1) according to claim 3, **characterised in that** the first sectors (33) and the third sectors (35) cover a quarter to a third of the ring faces (28, 29).

5. Hand machine tool (1) according to one of the previous claims, **characterised in that** the second sectors (34) have studs (40) that are concentric to the working axis (11), which lie on a level with the first sector (33).

## Revendications

1. Machine-outil manuelle (1) comportant :
un mandrin (2) pour recevoir un outil (4) sur un axe de travail (11),
un moteur (5),
un mécanisme de percussion pneumatique (6),
un arbre entraîné (7) qui est couplé au mandrin (2) pour entraîner l'outil en rotation autour de l'axe de travail (11) et
un accouplement à friction (24) qui est agencé dans la transmission entre le moteur (5) et l'arbre entraîné (7),
dans laquelle l'accouplement à friction (24) comporte un disque côté moteur (25) et un disque côté entraîné (26),
**caractérisée en ce que** le disque côté moteur (25) sur une surface motrice annulaire (28) adjacente au disque côté entraîné (26) comporte des premiers secteurs (33) avec une valeur de friction élevée et des deuxièmes secteurs (34) avec une valeur de friction faible, et le disque côté entraîné (26) sur la surface motrice annulaire (29) adjacente à la surface motrice annulaire (28) comporte des troisièmes secteurs (35) avec une valeur de friction élevée et des quatrièmes secteurs (36) avec une valeur de friction faible, et **en ce que**
les premiers secteurs (33) et les troisièmes secteurs (35) comportent une surface caoutchoutée et les deuxièmes secteurs (34) et les quatrièmes secteurs (36) comportent une surface en acier polie.

2. Machine-outil manuelle (1) selon la revendication 1, **caractérisée en ce qu'**un ressort (30) maintient les deux surfaces annulaires (28, 29) en contact permanent.

3. Machine-outil manuelle (1) selon l'une des revendications précédentes, **caractérisée en ce que** les surfaces annulaires (28, 29) comportent respectivement au maximum trois premiers secteurs (33) et au maximum trois troisièmes secteurs (35).

4. Machine-outil manuelle (1) selon la revendication 3, **caractérisée en ce que** les premiers secteurs (33) et les troisièmes secteurs (35) recouvrent un quart à un tiers des surfaces annulaires (28, 29).

5. Machine-outil manuelle (1) selon l'une des revendications précédentes, **caractérisée en ce que** les deuxièmes secteurs (34) jusqu'à l'axe de travail (11) comporte des nervures concentriques (40) qui se situent dans un plan avec le premier secteur (33).
